# EUROPÄISCHE PATENTSCHRIFT

(11) **EP 0 987 519 B1**
(45) Veröffentlichungstag und Bekanntmachung des Hinweises auf die Patenterteilung: **19.11.2008**
(21) Anmeldenummer: 99250328.4
(22) Anmeldetag: 17.09.1999
(51) Int. Cl.: G01C 21/14, G08G 1/127

(54) **Verfahren und Vorrichtung zum Zuordnen von von einem fahrzeugseitigen Endgerät ermittelten Stützpunktinformationen**
Method and apparatus for arranging information obtained by an onboard terminal from a base station
Méthode et dispositif pour coordonner les informations d'un relais obtenues par un terminal à bord d'un véhicule

(30) Priorität: 18.09.1998 DE 19844289
(43) Veröffentlichungstag der Anmeldung: 22.03.2000
(73) Patentinhaber: ATX Europe GmbH, 40549 Düsseldorf (DE)
(72) Erfinder: Hort, Christian, Dipl.-Ing., 40589 Düsseldorf (DE); Meis, Josef, Dipl.-Math., 48147 Münster (DE); Michael, Oliver, Dipl.-Geogr., 40233 Düsseldorf (DE); Oppler, Jens, Dipl.-Math., 40217 Düsseldorf (DE)
(74) Vertreter: Meissner, Peter E.

(56) Entgegenhaltungen:
- EP-A- 0 790 486
- US-A- 4 350 970
- US-A- 5 610 821

## Beschreibung

Die Erfindung betrifft ein Verfahren und eine Vorrichtung zum Zuordnen von von einem fahrzeugseitigen Endgerät ermittelten Stützpunktinformationen betreffend auf einem Fahrweg des Fahrzeuges durch ein Verkehrsnetz liegende Stützpunkte zur wahrscheinlichsten von mehreren Wegaltemativen in einer digitalen Karte des Verkehrsnetzes.

Dem Fachmann ist bekannt, dass den Fahrtweg eines Fahrzeuges durch ein Verkehrsnetz betreffende Stützpunktinformationen von einem fahrzeugseitigen Endgerät per Mobilfunk etc. an eine Zentrale übermittelt und dazu verwendet werden können, in einer digitalen Karte des Verkehrsnetzes den Weg des Fahrzeuges zu bestimmen. Stützpunktinformationen können in einem fahrzeugseitigen Endgerät beispielsweise in regelmäßigen Zeitabständen und/oder unter bestimmten Umständen (wie Fahrtrichtungswechsel und/oder Geschwindigkeitsänderung) erfasst werden. Ihre Übermittlung an eine Zentrale ist kostenaufwendig. Mit bekannten Endgeräten kann die Position aufgrund von GPS erfasst werden; ferner ist die Positionserfassung im Endgerät aufgrund einer dortigen digitalen Karte und der Verfolgung des Endgerät-Weges aufgrund von Geschwindigkeiten und Lenkradeinschlägen etc. möglich. Die fahrzeugseitige Positionserfassung ist jedoch bei allen Endgeräten mit Fehlern behaftet, was zu ungenauen oder teilweise nicht möglichen (weil nicht auf Straßen verlaufenden etc.) Zuordnungen von Stützpunktinformationen zu angenommenen Wegaltemativen in einer digitalen Karte des Wegnetzes führt und damit bei Verwendung der Stützpunktinformationen für die Navigation nur eine suboptimale Navigation ermöglicht bzw. bei Verwendung der Stützpunktinformationen zur Generation von FCD-Daten (Verkehrs-lnformationen, welche in einem fahrzeugseitigen Endgerät erfasst und an eine Zentrale übermittelt werden) Referenzierungs-Probleme mit sich bringt.

Das Dokument EP-A1-0 029 201 offenbart ein Verfahren und eine Vorrichtung zur Verkehrserfassung. Dabei wird das Verkehrsnetz mittels Leitbaken aufgeteilt und die jeweiligen durch Fahrzeuge zurückgelegten Strecken zwischen ihnen als Folge von Wegvektoren beschrieben. Die Fahrzeuge erhalten dann Leitempfehlungen in Form einer Kette von Leitvektoren, die mittels der Fahrzeuge zwischen den Leitbaken übertragen werden. Durch eine Auswahllogik für Alternativrouten lässt sich somit ein verkehrsabhängiges Leitsystem für den Nahbereich realisieren.

Aufgabe der vorliegenden Erfindung ist für eine unterhalb der Zahl der Straßenabschnitte einer Wegalternativen in der digitalen Karte liegende Zahl von endgerätseitig erfassten Stützpunkten eines Fahrweges eine möglichst zuverlässige Bestimmung eines Weges eines Fahrzeuges innerhalb einer digitalen Karte eines Verkehrsnetzes aufgrund der Stützpunkt-Informationen über den tatsächlich gefahrenen Fahrweg des Fahrzeuges im Verkehrsnetz durchzuführen. Die Aufgabe wird durch die unabhängigen Ansprüche gelöst.

Die Beurteilung mehrerer möglicher Wegalternativen durch eine digitale Karte aufgrund von einzelnen Stützpunkten des Fahrweges des Fahrzeuges auf einem tatsächlich durch ein Verkehrsnetz gefahrenen Weg betreffenden Stützpunktinformationen erlaubt eine qualitativ hochwertige Bestimmung des Weges des Fahrzeuges in der digitalen Karte.

Die Bestimmung des Weges des Fahrzeuges kann dazu verwendet werden, um den aktuellen Standort des Fahrzeuges (am Ende des Fahrweges) möglichst zuverlässig zu bestimmen, was für Pannen- und Notrufdienste, dynamische Off-Board-Navigation, FCD-Fahrspurverfolgung etc. geeignet ist. Generell wird die Wegalternativenauswahl in einer digitalen Karte optimiert und Mehrdeutigkeiten (also mehrere etwa gleichwahrscheinliche Wege) werden minimiert. Dabei wird die Effizienz der Stützpunktinformations-Zuordnung gesteigert, und Fehler werden vermieden. Falls die Wahrscheinlichkeit der wahrscheinlichsten Wegalternative unter einem vorgebbaren (absoluten oder auf die nächstwahrscheinliche Alternative bezogenen) Schwellwert liegt, ist es möglich, zur manuellen Aufbereitung von der Zentrale die Stützpunktinformationen oder, falls gerade ein Anruf des Endgerätes (des Fahrzeugs) vorliegt, die Telefonverbindung vom Endgerät an ein Call-Center (mit menschlichem Operator) weiterzuleiten. Dies ist insbesondere sinnvoll, wenn das Endgerät die Stützpunktinformationen an eine Zentrale im Rahmen eines Navigationsdienstes übermittelt, also das Endgerät beispielsweise einen Routenvorschlag anfordert, wofür die aktuelle Position des Fahrzeuges zuverlässig bekannt sein muss und Unklarheiten von einem Call-Center geklärt werden können.

Die Beurteilung der Wahrscheinlichkeit einer Wegalternative kann vorzugsweise zusätzlich zur Anzahl der Stützpunkte des Fahrzeuges auf dieser Wegalternative auch die Distanzen einzelner Stützpunkte des tatsächlichen Fahrweges zur Wegalternative (in der digitalen Karte) berücksichtigen.

Das erfindungsgemäße Verfahren ist insbesondere als Programm realisierbar. Es ist auch in einem Endgerät, insbesondere einem Endgerät mit einer digitalen Karte, ausführbar.

Weitere Merkmale und Vorteile des Verfahrens ergeben sich aus den abhängigen Ansprüchen und der nachfolgenden Beschreibung eines Ausführungsbeispiels anhand der Zeichnung. Dabei zeigt:
- Fig. 1: als Flussdiagramm grob den Ablauf des erfindungsgemäßen Referenzierungs-Verfahrens in einem Rechner,
- Fig. 2: ein Beispiel der Zuordnung von Stützpunkten auf einem Fahrweg eines Fahrzeuges in einem Verkehrsnetz zu einer digitalen Karte und
- Fig. 3: ein weiteres Beispiel einer Stützpunkte-Zuordnung.

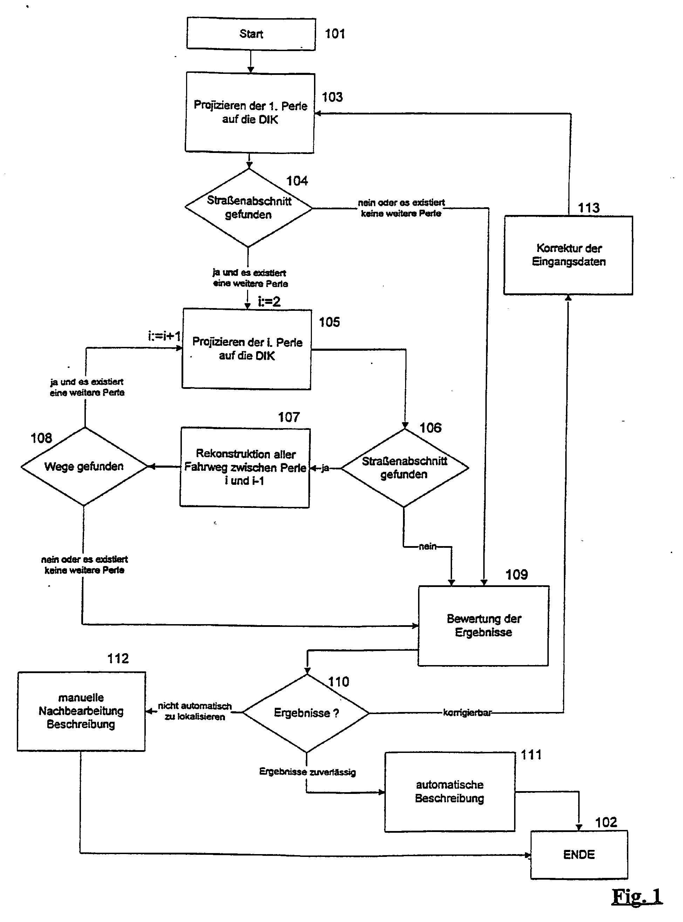

Fig. 1 zeigt ein grobes Flussdiagramm eines Programmes zur Durchführung des erfindungsgemäßen Verfahrens. Auf dem Fahrweg eines Fahrzeuges durch ein Verkehrsnetz liegende Stützpunkte betreffende Stützpunktinformationen werden von einem fahrzeugseitigen Endgerät ermittelt und an eine Zentrale (eines Navigationsdienstbetreibers, eines Verkehrsinformationsdienstes etc.) übermittelt, wo die Stützpunktinformationen Straßenabschnitten in einer digitalen Karte zugeordnet werden sollen, um den bisherigen Fahrweg des Fahrzeuges und/oder seine aktuelle Position zu bestimmen.

In Figur 1 wird für Stützpunkte auch die Bezeichnung "Perle", für die digitale Karte des Verkehrsnetzes die Bezeichnung "DIK", für Abschnitte von Wegalternativen die Bezeichnung "Straßenabschnitt" und für die Beurteilung der Wahrscheinlichkeit die Bezeichnung "Bewertung der Ergebnisse" verwendet.

Das Flussdiagramm in Fig. 1 beginnt mit dem Start 101 und endet am Ende 102. Es wird davon ausgegangen, dass zum Zeitpunkt des Startes 101 bereits Stützpunktinformationen eines Endgerätes betreffend in einem Verkehrsnetz liegende, vom Fahrzeug durchfahrene Stützpunkte in der Zentrale vorliegen.

Im Schritt 103 wird der erste Stützpunkt (auf dem Fahrweg eines Fahrzeuges durch ein Verkehrsnetz) auf die digitale Karte (DIK) des Verkehrsnetzes in der Zentrale projiziert, also einem Punkt in der digitalen Karte zugeordnet. Wenn, wie allgemein üblich, die digitale Karte aus Vektorzügen besteht, wobei ein Vektorzug jeweils z.B. eine Straße und ein Vektor des Vektorzuges einen Straßenabschnitt repräsentiert, umfaßt die Projizierung eines Stützpunktes zur digitalen Karte seine Zuordnung zu einem oder mehreren Vektoren oder Vektorzügen, üblicherweise zu einem Vektor; hierzu kann, wenn die Stützpunktinformationen geographische Daten eines Stützpunktes enthalten, die geographische Stützpunkt-Position vergleichend verwendet werden, wenn (wie hier) zu Vektoren oder Vektorzügen in der digitalen Karte ebenfalls deren geographische Position (insbesondere die geographische Position von zumindest deren Ende und/oder Anfang) vorliegt.

Das Verfahren trifft nun die Feststellung (in einem Programm etc.), ob die Projektion des ersten Stützpunktes auf die digitale Karte zuverlässig zutreffend möglich war, also ob ein Straßenabschnitt (= Vektor auf einer Wegalternative in der digitalen Karte) gefunden wurde. Falls ein passender Vektor (= Straßenabschnitt einer Wegalternative) gefunden wird, und mindestens ein weiterer Stützpunkt des Fahrzeuges vorliegt, wird im Schritt 105 weiterverfahren.

Im Schritt 105 wird ein programminterner Zähler für die Nummer des gerade bearbeiteten Stützpunktes, hier der Zähler µm 1 erhöht (hier auf i = 2 erhöht) und der i-te-Stützpunkt auf die digitale Karte zu projizieren versucht.

Nach dem Schritt 105 wird in der Entscheidung 106 vom Programm (zur Durchführung des Verfahrens) geprüft, ob für den gerade betrachteten i-ten Stützpunkt ein passender Straßenabschnitt (= Vektor = Teil einer Wegalternative) gefunden wurde. Falls in der Entscheidung 106 ein passender Straßenabschnitt gefunden wurde, wird mit Schritt 107 weiterverfahren. Im Schritt 107 erfolgt eine Rekonstruktion aller möglichen Wegalternativen zwischen dem aktuellen (= i-ten = hier zweiten) Stützpunkt und dem vorhergehenden (= ersten) Stützpunkt. Es soll also zwischen dem aktuell betrachteten und dem vorhergehenden Stützpunkt ein Teil der wahrscheinlichsten Wegalternative in der digitalen Karte zum tatsächlichen Fahrweg des Fahrzeuges im Verkehrsnetz rekonstruiert werden.

Hierzu können unterschiedlichste Informationen verwendet werden. Insbesondere kann die Fahrtrichtung (enthalten in den Stützpunktinformationen) des Fahrzeuges am (i - 1-ten) vorigen Stützpunkt verwendet werden, um bestimmte Fahrwegalternativen zwischen den beiden Stützpunkten auszuschließen; dabei kann eine Information in einer digitalen Karte dahingehend, dass eine bestimmte Wegalternative zwischen den Stützpunkten nur in bestimmter Richtung durchfahrbar ist (aufgrund von Einbahnstraßen etc.) zum Ausschluss bestimmter Wegalternativen verwendet werden. Aufgrund von Erfahrungswerten können ferner aufgrund der Zeiten, welche ein Fahrzeug von einem Stützpunkt zum nächsten Stützpunkt benötigt, bestimmte Wegalternativen (durch verkehrsberuhigte Zonen, Zonen mit niedriger vorgegebener Geschwindigkeit etc.) ausgeschlossen werden. Auch kann der Winkeltrichter zwischen den beiden extremsten Fahrtrichtungen (Himmelsrichtungen) berücksichtigt werden.

Hierauf wird festgestellt, ob zwischen dem aktuellen (i-ten) und dem vorigen (i - 1ten) Stützpunkt ein Fahrweg oder mehrere Fahrwege (jeweils zugehörig zu einer Wegalternative) gefunden wurden. Falls dies zutrifft, wird in der Entscheidung 108 entschieden, mit dem nächsten Stützpunkt fortzufahren (also den internen Zähler (i) zu erhöhen auf i + 1) und mit Schritt 105 fortzufahren für den nächstfolgenden Stützpunkt.

Falls in der Entscheidung 108 entschieden wird, dass entweder zwischen dem aktuellen Stützpunkt und dem davorliegenden (i - 1-ten) Stützpunkt kein Weg gefunden wurde oder dass kein weiterer Stützpunkt (i + 1-ter Stützpunkt) zu untersuchen ist, wird im Schritt 109 fortgefahren. Zu Schritt 109 wird auch nach Schritt 103 übergegangen, falls in der Entscheidung 104 festgestellt wird, dass keine weitere Stützpunktinformation vorliegt. Im Schritt 109 wird ein erfindungsgemäßes Verfahren zur Beurteilung der Wahrscheinlichkeit der Übereinstimmung einer Wegalternative (in der digitalen Karte) mit dem Fahrweg eines Fahrzeuges durchgeführt. Hierzu wird insbesondere jeweils die Anzahl der Stützpunkte des Fahrzeuges auf einer möglichen Wegalternative geprüft. Mögliche Wegalternativen können, wie oben beschrieben, bestimmt werden.

Ferner ist es möglich, in einem bestimmten maximalen geographischen Abstand zu den vorhandenen Stützpunkten alle Straßen zu berücksichtigen.
Die erfindungsgemäße Beurteilung der Wahrscheinlichkeit des Zutreffens einer Wegalternative im Schritt 109 kann die Anzahl der Stützpunkte des Fahrzeuges auf einer Wegalternative dergestalt berücksichtigen, daß Stützpunkte des Fahrzeuges als zu einer Wegalternative gehörend definiert werden, wenn sie hiervon (bzw. von einzelnen Vektoren = Straßenabschnitten einer Vektorkette = Wegalternative) einen vorgebbaren Maximalabstand nicht überschreiten.

Neben der Anzahl der auf einer Wegalternative liegenden Stützpunkte kann zur Beurteilung der Güte (Maßstab für die Wahrscheinlichkeit einer Wegalternative) auch die Distanz der Stützpunkte von der Wegalternative (bzw. von der Vektorkette oder von den Vektoren = Straßenabschnitten der Vektorkette) berücksichtigt werden. Hierzu kann die in übermittelten Stützpunktinformationen enthaltene (vom Endgerät durch GPS etc. bestimmte) geographische Position des Endgerätes an einem Stützpunkt verglichen werden mit zur digitalen Karte vorliegenden Informationen betreffend geographische Informationen von Wegalternativen oder Abschnitten (= Vektoren = Straßenabschnitten) von Wegalternativen (= Vektorenketten), insbesondere von Anfangs- und Endpunkten von Straßenabschnitten einer Wegalternative. Die Distanz der Stützpunkte eines Fahrweges eines Fahrzeuges kann gemittelt werden und der gemittelte Wert zur Beurteilung der Wahrscheinlichkeit einer Wegalternative berücksichtigt werden. Besonders vorteilhaft ist die stärkere Berücksichtigung der Anzahl der Stützstellen auf einer Wegalternative verglichen mit dem mittleren Abstand der Stützpunkte von einer Wegalternative. Hierzu kann insbesondere die Beziehung verwendet werden:
Güte einer Wegalternative = (Minimum (Zahl vorliegender Stützpunkte minus 1; Zahl der auf der Wegalternative liegenden Stützpunkte) plus Maximum (0;(1 minus mittlerer Wegpunkte-Abstand von der Wegalternative geteilt durch Schwellwert)) x 100)/(Anzahl der Stützpunkte)

Die Güte ist also bei einer hohen Zahl von auf einer Wegalternative liegenden Stützpunkten ebenso wie bei einer hohen Zahl von Stützpunkten sowie bei geringem mittleren Abstand von Stützpunkten von einer Wegalternative hoch. Die Güte ist ein Maß für die Wahrscheinlichkeit der Übereinstimmung einer Wegalternative in einer digitalen Karte eines Verkehrsnetzes mit dem tatsächlichen Fahrweg eines Fahrzeuges durch ein Verkehrsnetz.

Wenn im Schritt 109 in Figur 1 aufgrund der Güte festgestellt wird, dass die Wahrscheinlichkeit der Übereinstimmung einer Wegalternative in einer digitalen Karte mit dem Fahrweg eines Stützpunktinformationen übermittelnden Fahrzeuges groß ist, die Entscheidung für diese Wegalternative also hinreichend zuverlässig ist, wird in der Entscheidung 110 entschieden, daß diese Wegalternative als tatsächlicher Fahrweg bzw. als dessen Zuordnung zur digitalen Karte angenommen wird und hierauf erfolgt (im Schritt 111) eine automatische Beschreibung des Fahrweges referenziert zur digitalen Karte in Form der wahrscheinlichsten Wegalternative sowie beispielsweise eine automatische Ausgabe des Fahrweges an eine FCD-Daten-Sammelzentrale oder eine Navigations-Dienst-Einrichtung oder ein Fahrzeug. Hierauf geht das Programm vom Schritt 111 zum Schritt 102, also zum Ende.

Wenn in der Entscheidung 110 entschieden wird, dass keine Wegalternative hinreichend wahrscheinlich den Fahrweg des Fahrzeuges auf die digitale Karte des Verkehrsnetzes abbildet, wird eine manuelle Nachbearbeitung im Schritt 112 veranlasst. Die manuelle Nachbearbeitung kann beispielsweise in der Entscheidung 110 beschlossen werden, wenn die Wahrscheinlichkeit (bzw. die Güte) der wahrscheinlichsten Wegalternative unter einem Schwellwert liegt oder die Differenz der Wahrscheinlichkeit der wahrscheinlichsten Wegalternative zur nächstwahrscheinlichen Wegalternative unter einem Schwellwert liegt.

Im Schritt 112 kann die manuelle Nachbearbeitung beispielsweise umfassen, dass die Stützpunktinformationen von der Zentrale an ein Call-Center, also einen menschlichen Angestellten in einem Bearbeitungszentrum, zur Entscheidung über den Weg weiterübermittelt werden. Dies ist insbesondere sinnvoll, wenn eingangs 101 von einem Fahrzeug die Stützpunktinformationen an die Zentrale übermittelt wurden mit der Aufforderung, von der Zentrale an das Endgerät einen Navigationsvorschlag zu übermitteln, für welchen als Startposition eine gute Zuordnung der aktuellen Fahrzeugposition zur digitalen Karte notwendig ist, welche durch Analyse des bisherigen Weges des Fahrzeuges zuverlässiger möglich ist als alleine aufgrund der aktuellen geographischen Position. Die manuelle Nachbearbeitung im Schritt 112 kann auch im Rahmen einer Erfassung von FCD-Daten für statistische Zwecke erfolgen. Ferner kann das erfindungsgemäße Verfahren auch zur Ortsbestimmung im Falle eines Notrufs des Endgerätes bei einer Zentrale verwendet werden.

Nach dem Schritt 112 fährt das Programm mit dem Schritt 102 fort, ist also am Ende angelangt.

Falls in der Entscheidung 110 entschieden wird, dass die Wahrscheinlichkeit (bzw. Güte) der wahrscheinlichsten Wegalternative für eine Annahme dieser Wegalternative als tatsächlicher Fahrweg in der digitalen Karte nicht ausreicht, die Stützpunktdaten jedoch korrigierbar sind, werden im Schritt 113 die Eingangsdaten korrigiert, also beispielsweise einzelne, besonders weit abliegende oder unplausible Stützpunkte eliminiert, Abschnitte von Wegalternativen verändert etc.

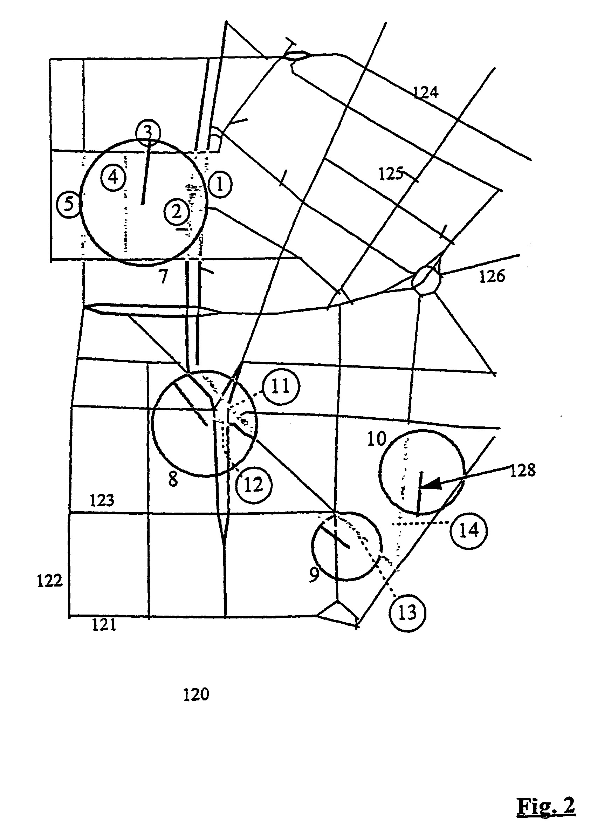

Ein Beispiel der Ausführung des Verfahrens wird anhand von Fig. 2 erläutert.

In Figur 2 wird der Weg eines Fahrzeuges in einem Verkehrsnetz durch die auf diesem Fahrweg liegenden Stützpunkte 10, 9, 8, 7 beschrieben. Die Stützpunktinformationen beschreiben den geographischen Ort eines Stützpunktes mit einem maximalen Positionsfehler, welcher durch einen Kreis angedeutet ist. Die Detektion des geographischen Ortes erfolgt im Endgerät beispielsweise durch GPS. Aufgrund des Positionsfehlers der ermittelten Position befindet sich die tatsächliche Position des Fahrzeuges jeweils innerhalb eines in Figur 2 für die Stützpunkte 10, 9, 8, 7 beispielhaft angedeuteten kreisförmigen Bereichs. Die Fahrtrichtung an einer (durch einen Kreis 14 etc. an einer Stützstelle dargestellten) Fahrzeugposition wird jeweils durch einen radialen Vektor im Kreis angegeben und verläuft im Kreis 10 vom Mittelpunkt in Richtung der Linie (128) nach außen. Zusätzlich zur geographischen Position wird hier jeweils die aktuelle Fahrtrichtung eines Fahrzeuges an einem Stützpunkt im Fahrzeug ermittelt (beispielsweise aufgrund von zwei aufeinanderfolgenden GPS-Messungen und Differenzbildung) und mit den Stützpunktinformationen ebenfalls an eine Zentrale übermittelt.

Der Fahrweg und/oder die aktuelle Position des Fahrzeuges soll der digitalen Karte 120 zugeordnet werden, welche in Fig. 2 durch Straßenabschnitte (des Verkehrsnetzes) repräsentierende Linien 121,122,123,124,125,126 usw. dargestellt ist.

Bezüglich der aktuellen Position 7 ist eine Zuordnung zu den Straßenabschnitten 1, 2, 3, 4, 5 der digitalen Karte 120 in Figur 2 möglich. Der Straßenabschnitt 2 kann hier ausgeschlossen werden, da dieser eine Einbahnstraße mit der Fahrtrichtung des Fahrzeuges (welche in den Stützpunktinformationen zum Stützpunkt 7 enthalten ist) entgegengesetzer Richtung ist. Zur Beurteilung der Wahrscheinlichkeiten der möglichen aktuellen Positionen (in den Straßenabschnitten 1, 3, 4, 5) kann der bisherige Fahrweg (10, 9, 8) verwendet werden:

Für den nächsten zu betrachtenden, zeitlich vor 7 liegenden Stützpunkt des Fahrzeuges, den Stützpunkt 8, ist eine Zuordnung in der digitalen Karte 120 zu den Straßenabschnitten 11, 12 möglich. Als Wegalternativenteil zwischen den Stützpunkten 7 und 8 ist hier der Weg 11 (Straßenabschnitt) am wahrscheinlichsten, da auf diesem Weg die Stützpunkte 7, 8 liegen. Dies ist hier dadurch ersichtlich, dass die Kreise in Figur 2 (welche die Position an den Stützpunkten 7 und 8 jeweils mit der durch Positionsfehler bedingten Ungenauigkeit eingrenzen) den Straßenabschnitt 11 und dessen in Figur 2 nach oben führende Fortsetzung im Straßenabschnitt 1 berühren. Deshalb ist der Teil einer Wegalternative zwischen den Stützpunkten 7 und 8 am wahrscheinlichsten, der über den Straßenabschnitt 11 führt.

Somit ist die Wahrscheinlichkeit, dass der aktuelle Ort des Fahrzeuges auf dem Straßenabschnitt 1 richtig ist, am größten, da zu diesem Ort die Wegalternative, welche den Straßenabschnitt 11 beinhaltet, führt. Zum Straßenabschnitt 5 wäre von dem Stützpunkt 8 aus z.B. ein wesentlich komplizierterer Weg (= stärkere Lenkrad-Winkeleinschläge erfordernder Weg) zu fahren, welcher als unwahrscheinlicher betrachtet wird. Somit wird die Wegalternative mit dem Weg 11 als wahrscheinlichste Wegalternative und tatsächlicher Weg des Fahrzeuges zur digitalen Karte referenziert. Dies wird durch das Finden eines Weges von 10 zu 9,9 zu 8 (über 14, 13, 11) weiter bestätigt.

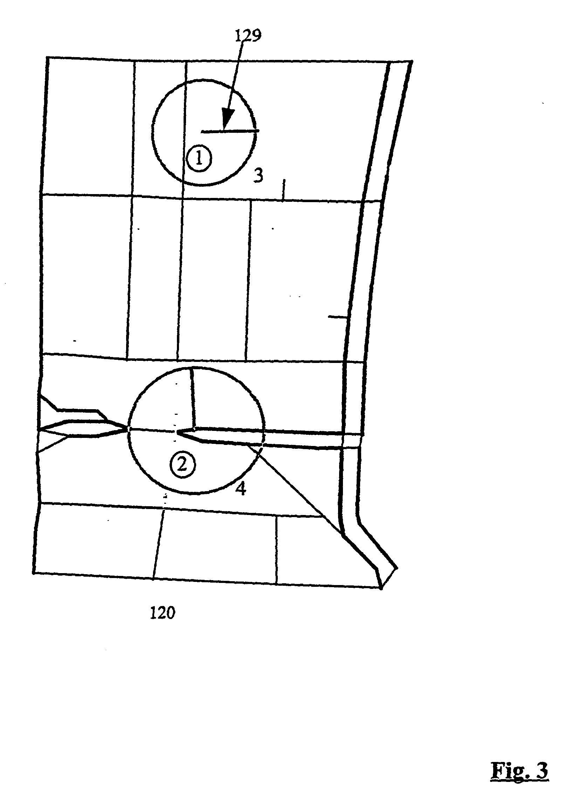

Figur 3 zeigt ein Beispiel, in welchem ein Verändern der Eingangsdaten (gemäß Figur 1, Schritt 13) sinnvoll sein kann. Hier liegen (zumindest) die beiden letzten Stützpunkte 3 und 4 vor, welche hier ebenfalls jeweils durch Kreise dargestellt sind, deren Radius den Grad der Ungenauigkeit der Positionsbestimmung im Fahrzeug angibt. Das Fahrzeug kann sich also am Stützpunkt 3 innerhalb des dortigen Kreises 3 und am Stützpunkt 4 innerhalb des dortigen Kreises 4 aufgehalten haben und fährt in Richtung 129 , also von links nach rechts. Aufgrund der Fahrtrichtung 129 am Stützpunkt 3 (welche mit den Stützpunktinformationen übermittelt wurde) liefert der Versuch der Projektion des Stützpunktes auf die digitale Karte 120 kein sinnvolles Ergebnis. Aufgrund der Fahrtrichtung im Stützpunkt 3 kann allerdings die wahrscheinlichste Wegalternative besser bestimmt werden. Da das Fahrzeug sich hier zuerst am Stützpunkt 4 und später am Stützpunkt 3 befand, ist der Fahrtweg bestimmbar als in Figur 3 von unten nach oben führend, also vom Stützpunkt 4 zum Stützpunkt 3. Deshalb ist hier ein Einbiegen in eine in der Karte nicht enthaltene Parkbucht wahrscheinlich. Die wahrscheinlichste Wegalternative für den bisherigen Fahrweg umfaßt die beiden Straßenabschnitte 2 und 1 (in dieser Reihenfolge).

## Patentansprüche

1. Verfahren zum Zuordnen von von einem fahrzeugseitigen Endgerät erfassten Stützpunktinformationen betreffend auf einem vom Fahrzeug gefahrenen Fahrweg durch ein Verkehrsnetz liegende Stützpunkte (10, 9, 8, 7) zur wahrscheinlichsten von mehreren Wegaltemativen (14, 11, 1) in einer digitalen Karte (120) des Verkehrsnetzes,
wobei eine Wegalternative jeweils aus einer Kette von Straßenabschnitten der digitalen Karte besteht und die Wahrscheinlichkeiten des Verlaufs des Fahrweges durch Straßenabschnitte der Wegaltemativen betrachtet werden und die Wahrscheinlichkeit einer Wegalternative aufgrund der Wahrscheinlichkeiten des Fahrwegverlaufs durch ihre Straßenabschnitte beurteilt wird,
wobei die wahrscheinlichste Wegalternative in der digitalen Karte als für den Fahrweg zutreffend angenommen wird,
wobei die Zahl der fahrzeugseitig erfassten Stützpunkte des Fahrweges kleiner als die Zahl der betrachteten Straßenabschnitte der Wegalternative ist.

2. Verfahren nach Anspruch 1,
wobei
Distanzen mehrerer einzelner Stützpunkte von einer Wegalternative berücksichtigt werden bei der Beurteilung der Wahrscheinlichkeit der Wegalternative.

3. Verfahren nach Anspruch 2,
wobei
die Distanzen zur Beurteilung gemittelt werden.

4. Verfahren nach Anspruch 2 oder 3,
wobei
die Anzahl der Stützpunkte, die mit einer maximalen Abweichung auf Straßenlabschnitten auf einer Wegalternative liegt, stärker berücksichtigt wird als die gemittelten Distanzen aller Stützpunkte von Straßenabschnitten.

5. Verfahren nach einem der vorhergehenden Ansprüche,
wobei
die Wahrscheinlichkeit der Übereinstimmung einer Wegalternative (14,11,1; 14,11,2) mit dem Fahrweg jeweils beurteilt wird aufgrund zumindest der Anzahl der Stützpunkte (10,9,8,7) des Fahrzeuges, durch die diese Wegalternative führt.

6. Verfahren nach einem der vorhergehenden Ansprüche,
wobei
die fahrzeugseitig als Himmelsrichtung erfasste Fahrtrichtung des Fahrzeuges am Stützpunkt bei der Betrachtung der Wahrscheinlichkeit der Übereinstimmung eines Straßenabschnittes einer Wegalternative mit dem Stützpunkt berücksichtigt wird.

7. Verfahren nach einem der vorhergehenden Ansprüche,
wobei
die maximale Winkelabweichung der Fahrtrichtung des Fahrzeuges zwischen zwei Stützpunkten gegenüber bisherigen Fahrtrichtungen zwischen diesen beiden Stützpunkten berücksichtigt wird bei der Betrachtung der Wahrscheinlichkeit der Übereinstimmung eines Straßenabschnittes einer Wegalternative mit dem letzten der beiden obigen Stützpunkte.

8. Verfahren nach einem der vorhergehenden Ansprüche,
wobei die vom Endgerät erfasste Reihenfolge der Stützpunkte längs des Fahrweges in der Zentrale berücksichtigt wird bei der Bestimmung von Wegalternativen, insbesondere bei der Bestimmung der Wahrscheinlichkeit von Straßenabschnitten von Wegalternativen.

9. Verfahren nach einem der vorhergehenden Ansprüche,
wobei
der Fahrzeug- seitig erfasste Weg zwischen den Stützpunkten längs des Fahrweges in der Zentrale berücksichtigt wird bei der Bestimmung von Wegalternativen, insbesondere bei der Bestimmung der Wahrscheinlichkeit von Straßenabschnitten von Wegalternativen.

10. Verfahren nach einem der vorhergehenden Ansprüche,
wobei
die Zuordnung der Stützpunkte des Fahrweges zu Straßenabschnitten von Wegalternativen und die Bestimmung der wahrscheinlichsten Wegalternative in der Zentrale erfolgt.

11. Verfahren nach einem der vorhergehenden Ansprüche,
wobei
die Zuordnung der Stützpunkte des Fahrweges zu Straßenabschnitten von Wegalternativen und die Bestimmung der wahrscheinlichsten Wegalternative im Endgerät erfolgt.

12. Verfahren nach einem der vorhergehenden Ansprüche,
wobei
ein Stützpunkt als auf einer Wegalternative liegend definiert wird, wenn die Wegalternative durch einen die geographische Ungenauigkeit der Stützpunkt-Position wiedergebenden Kreis um die erfasste Stützpunkt-Position verläuft.

13. Verfahren nach einem der vorhergehenden Ansprüche,
wobei
die Wahrscheinlichkeit des Zutreffens einer Wegalternative beurteilt wird aufgrund der Beziehung
Güte einer Wegalternative = (Minimum (Zahl vorliegender Stützpunkte minus 1; Zahl der auf der Wegalternative liegenden Stützpunkte) plus Maximum (0;(1 minus mittlerer Wegpunkte-Abstand von der Wegalternative geteilt durch Schwellwert)) x 100)/(Anzahl der Stützpunkte).

14. Verfahren nach einem der vorhergehenden Ansprüche,
wobei
ein Stützpunkt als auf einer Wegalternative liegend betrachtet wird, wenn sein geographischer Abstand von der Wegalternative einen vorgebbaren Schwellwert nicht überschreitet.

15. Verfahren nach Anspruch 14,
wobei
der Schwellwert aufgrund jeweils der vom Endgerät angegebenen Genauigkeit einer Stützpunktinformation vorgegeben wird.

16. Verfahren nach einem der vorhergehenden Ansprüche,
wobei
nur Straßensegmente betrachtet werden, die innerhalb des GPS-Fehlerradius eines Stützpunktes liegen.

17. Verfahren nach einem der vorhergehenden Ansprüche,
wobei
den Stützpunktdaten zu einem Stützpunkt vom Fahrzeug zur Zentrale mindestens die geographische Position des Stützpunktes übermittelt und dort berücksichtigt wird.

18. Verfahren nach einem der vorhergehenden Ansprüche,
wobei
der letzte Stützpunkt insofern anders behandelt wird, als seine Zuordnung zu einem Straßenabschnitt mit anderen Schwellwerten oder Gewichtungen insbesondere der Fahrtrichtung, des Maximalwinkelausschlags, der Fahrtstrecke seit dem letzten Stützpunkt, der Reisezeit seit dem letzten Stützpunkt erfolgt.

19. Verfahren nach einem der vorhergehenden Ansprüche,
wobei
in den Stützpunktinformationen der Zeitpunkt, an welchem sich ein Fahrzeug an einem Stützpunkt befindet, vom Endgerät erfasst und berücksichtigt wird.

20. Verfahren nach einem der vorhergehenden Ansprüche,
wobei
in den Stützpunktinformationen die Geschwindigkeit eines Fahrzeuges an einem Stützpunkt vom Endgerät erfasst und berücksichtigt wird.

21. Verfahren nach einem der vorhergehenden Ansprüche,
wobei
das Verfahren zur Navigation eines Fahrzeuges mit einem Endgerät verwendet wird.

22. Verfahren nach einem der vorhergehenden Ansprüche,
wobei
aufgrund der wahrscheinlichsten Wegalternative die aktuelle geographische Position eines Fahrzeuges und/oder die aktuelle Position eines Fahrzeuges in der digitalen Karte ermittelt wird.

23. Verfahren nach einem der vorhergehenden Ansprüche,
wobei
aufgrund der wahrscheinlichsten Wegalternative der bisherige Weg eines Fahrzeuges in der digitalen Karte bestimmt wird.

24. Verfahren nach einem der vorhergehenden Ansprüche,
wobei
mindestens um den Faktor 10, insbesondere um den Faktor 100, weniger Stützstellen vorliegen als Straßensegmente in einer der Wegaltemativen in der digitalen Karte enthalten sind.

25. Verfahren nach einem der vorhergehenden Ansprüche,
wobei
bei unter einem vorgebbaren Schwellwert liegender Wahrscheinlichkeit der wahrscheinlichsten Wegalternative oder, falls keine Wegalternative gefunden wurde, die Stützpunktinformationen zur manuellen Auswertung bereitgestellt werden.

26. Vorrichtung, insbesondere zur Durchführung des Verfahrens nach einem der - vorhergehenden Ansprüche,
- mit einer Erfassungseinrichtung für von einem Fahrzeug ermittelte Stützpunktinformationen betreffend Stützpunkte auf dem Fahrweg des Fahrzeuges im Verkehrsnetz
- mit einem Speicher mit einer digitalen Karte
- mit einer Wahrscheinlichkeitsbeurteilungseinrichtung zur Beurteilung der Wahrscheinlichkeiten des Zutreffens mehrerer Wegaltemativen in der digitalen Karte aufgrund von Wahrscheinlichkeiten von Wegabschnitten der Wegalternativen
- mit einer Ausgabeeinrichtung zur Ausgabe der aktuellen Position und/oder des Weges des Fahrzeuges in der digitalen Karte.

27. Vorrichtung nach Anspruch 26,
wobei
die Wahrscheinlichkeitsbeurteilungseinrichtung einen Prozessor und ein davon zu bearbeitendes Programm enthält.

28. Vorrichtung nach Anspruch 26 oder 27,
wobei
die Empfangseinrichtung und/oder die Ausgabeeinrichtung eine Funkeinrichtung, insbesondere Mobilfunkeinrichtung, umfasst.

29. Vorrichtung nach einem der Ansprüche 26 bis 28,
wobei
als Erfassungseinrichtung eine Empfangseinrichtung zum Empfangen von Stützstellen betreffenden, von einem Endgerät gesendeten Informationen vorgesehen ist und die Vorrichtung die Zentrale ist.

## Claims

1. A method of assigning checkpoint data, collected by an onboard terminal and relating to checkpoints (10, 9, 8, 7) lying on a route travelled by a vehicle through a traffic network, to the most probable of a plurality of route alternatives (14, 11, 1) on a digital map (120) of the traffic network,
wherein each route alternative consists of a chain of road sections on the digital map, and the probabilities of the course of the route through road sections of the route alternatives are considered, and the probability of a route alternative is assessed on the basis of the probabilities of the course of the route through its road sections,
wherein the most probable route alternative on the digital map is regarded as the correct route,
wherein the number of checkpoints detected onboard along the route is smaller than the number of considered road sections of the route alternative.

2. A method according to claim 1,
wherein distances of a plurality of individual checkpoints from a route alternative are taken into consideration when assessing the probability of the route alternative.

3. A method according to claim 2,
wherein the distances are averaged for assessment.

4. A method according to claim 2 or 3, wherein the number of checkpoints lying with a maximum deviation on road sections of a route alternative is taken into greater consideration than the averaged distances of all checkpoints from road sections.

5. A method according to any one of the preceding claims,
wherein the probability of a route alternative (14, 11, 1; 14, 11, 2) coinciding with the route travelled is assessed in each case on the basis of at least the number of vehicle checkpoints (10, 9, 8, 7) through which this route alternative leads.

6. A method according to any one of the preceding claims,
wherein the direction of travel of the vehicle, detected onboard as a compass bearing, at the checkpoint is taken into account when considering the probability of a road section of a route alternative coinciding with the checkpoint.

7. A method according to any one of the preceding claims,
wherein the maximum angular deviation of the direction of travel of the vehicle between two checkpoints in relation to previous directions of travel between these two checkpoints is taken into account when considering the probability of a road section of a route alternative coinciding with the last of the two above checkpoints.

8. A method according to any one of the preceding claims,
wherein the order of the checkpoints detected along the route by the terminal is taken into consideration in the control centre when determining route alternatives, in particular when determining the probability of road sections of route alternatives.

9. A method according to any one of the preceding claims,
wherein the route, detected onboard, between the checkpoints along the route travelled is taken into consideration in the control centre when determining route alternatives, in particular when determining the probability of road sections of route alternatives.

10. A method according to any one of the preceding claims,
wherein the assignment of the checkpoints on the route to road sections of route alternatives and the determination of the most probable route alternative takes place in the control centre.

11. A method according to any one of the preceding claims,
wherein the assignment of the checkpoints on the route to road sections of route alternatives and the determination of the most probable route alternative takes place in the terminal.

12. A method according to any one of the preceding claims,
wherein a checkpoint is defined as lying on a route alternative if the route alternative passes through a circle, reflecting the geographical inaccuracy of the checkpoint position, around the detected checkpoint position.

13. A method according to any one of the preceding claims,
wherein the probability of the correctness of a route alternative is assessed on the basis of the relationship
quality of a route alternative = (minimum (number of existing checkpoints minus 1; number of checkpoints lying on the route alternative) plus maximum (0; (1 minus average checkpoint distance from the route alternative divided by threshold value)) x 100)/(number of checkpoints).

14. A method according to any one of the preceding claims,
wherein a checkpoint is considered as lying on a route alternative if its geographical distance from the route alternative does not exceed a predeterminable threshold value.

15. A method according to claim 14,
wherein the threshold value is predetermined in each case on the basis of the accuracy of a checkpoint datum, the accuracy being indicated by the terminal.

16. A method according to any one of the preceding claims,
wherein only road segments which lie within the GPS error radius of a checkpoint are considered.

17. A method according to any one of the preceding claims,
wherein, in the checkpoint data relating to a checkpoint, at least the geographical position of the checkpoint is transmitted from the vehicle to the control centre, where it is taken into consideration.

18. A method according to any one of the preceding claims,
wherein the last checkpoint is treated differently in so far as its assignment to a road section takes place with other threshold values or weightings, in particular the direction of travel, the maximum angular deviation, the distance travelled since the last checkpoint, the travel time since the last checkpoint.

19. A method according to any one of the preceding claims,
wherein, in the checkpoint data, the time at which a vehicle is located at a checkpoint is detected by the terminal and taken into consideration.

20. A method according to any one of the preceding claims,
wherein, in the checkpoint data, the speed of a vehicle at a checkpoint is detected by the terminal and taken into consideration.

21. A method according to any one of the preceding claims,
wherein the method is used for navigating a vehicle with a terminal.

22. A method according to any one of the preceding claims,
wherein the current geographical position of a vehicle and/or the current position of a vehicle on the digital map is determined on the basis of the most probable route alternative.

23. A method according to any one of the preceding claims,
wherein the previous route of a vehicle on the digital map is determined on the basis of the most probable route alternative.

24. A method according to any one of the preceding claims,
wherein fewer checkpoints exist, at least by a factor of 10, in particular by a factor of 100, than road sections are contained in one of the route alternatives on the digital map.

25. A method according to any one of the preceding claims,
wherein, if the probability of the most probable route alternative lies below a predeterminable threshold value or if no route alternative was found, the checkpoint data are prepared for manual evaluation.

26. An apparatus, in particular for carrying out the method according to any one of the preceding claims,
- with a collection device for checkpoint data determined by a vehicle and relating to checkpoints on the route of the vehicle in the traffic network,
- with a memory containing a digital map,
- with a probability assessment device for assessing the probabilities of the correctness of a plurality of route alternatives on the digital map on the basis of probabilities of route sections of route alternatives,
- with an output device for outputting the current position and/or the route of the vehicle on the digital map.

27. An apparatus according to claim 26,
wherein the probability assessment device contains a processor and a program to be processed by it.

28. An apparatus according to claim 26 or 27,
wherein the receiving device and/or the output device comprises a radio device, in particular a mobile radio device.

29. An apparatus according to any one of claims 26 to 28,
wherein a receiving device for receiving data, relating to checkpoints and transmitted by a terminal, is provided as a collection device, and the apparatus is the control centre.

## Revendications

1. Procédé d'affectation d'informations de points de référence détectées par un terminal côté véhicule concernant des points de référence (10, 9, 8, 7) situés sur un trajet parcouru par le véhicule à travers un réseau de circulation à l'alternative d'itinéraire (14, 11, 1) la plus vraisemblable parmi plusieurs sur une carte numérique (120) du réseau de circulation, une alternative d'itinéraire étant composée d'une chaîne de segments de routes de la carte numérique, les probabilités du parcours de l'itinéraire étant considérées par le biais des segments de routes des alternatives d'itinéraire et la probabilité d'une alternative d'itinéraire étant évaluée sur la base des probabilités du parcours de l'itinéraire à travers ses segments de routes, l'alternative d'itinéraire la plus probable sur la carte numérique étant considérée comme pertinente pour le parcours, le nombre des points de référence du parcours détectés côté véhicule étant inférieur au nombre des segments de routes considérés de l'alternative d'itinéraire.

2. Procédé selon la revendication 1,
dans lequel les distances de plusieurs points de référence individuels d'une alternative d'itinéraire sont prises en compte lors de l'évaluation de la probabilité de l'alternative d'itinéraire.

3. Procédé selon la revendication 2,
dans lequel les distances font l'objet d'une moyenne à des fins d'évaluation.

4. Procédé selon la revendication 2 ou 3,
dans lequel le nombre des points de référence situés avec un écart maximal sur les segments de routes sur une alternative d'itinéraire est mieux pris en compte que la moyenne des distances de tous les points de référence de segments de routes.

5. Procédé selon l'une des revendications précédentes,
dans lequel la probabilité de la concordance d'une alternative d'itinéraire (14, 11, 1 ; 14, 11, 2) avec le parcours est à chaque fois évaluée sur la base d'au moins le nombre des points de référence (10, 9, 8, 7) du véhicule par lesquels passe cette alternative d'itinéraire.

6. Procédé selon l'une des revendications précédentes,
dans lequel la direction du véhicule détectée en tant que point cardinal côté véhicule au point de référence est prise en compte lors de l'observation de la probabilité de la concordance d'un segment de route d'une alternative d'itinéraire avec le point de référence.

7. Procédé selon l'une des revendications précédentes,
dans lequel l'écart angulaire maximal de la direction du véhicule entre deux points de référence par rapport aux directions actuelles entre ces deux points de référence est pris en compte lors de l'observation de la probabilité de la concordance d'un segment de route d'une alternative d'itinéraire avec le dernier des deux points de référence ci-dessus.

8. Procédé selon l'une des revendications précédentes,
dans lequel la séquence des points de référence détectés par le terminal le long du parcours est prise en compte dans le central lors de la détermination d'alternatives d'itinéraire, en particulier lors de la détermination de la probabilité de segments de routes d'alternatives d'itinéraire.

9. Procédé selon l'une des revendications précédentes,
dans lequel le trajet détecté côté véhicule entre les points de référence le long du parcours est pris en compte dans le central lors de la détermination d'alternatives d'itinéraire, en particulier lors de la détermination de la probabilité de segments de routes d'alternatives d'itinéraire.

10. Procédé selon l'une des revendications précédentes,
dans lequel l'affectation des points de référence du parcours aux segments de routes d'alternatives d'itinéraire et la détermination de l'alternative d'itinéraire la plus probable ont lieu dans le central.

11. Procédé selon l'une des revendications précédentes,
dans lequel l'affectation des points de référence du parcours aux segments de routes d'alternatives d'itinéraire et la détermination de l'alternative d'itinéraire la plus probable ont lieu dans le terminal.

12. Procédé selon l'une des revendications précédentes,
dans lequel un point de référence est défini comme étant situé sur une alternative d'itinéraire lorsque l'alternative d'itinéraire passe par un cercle représentant l'imprécision géographique de la position du point de référence autour de la position de point de référence détectée.

13. Procédé selon l'une des revendications précédentes,
dans lequel la probabilité de la pertinence d'une alternative d'itinéraire est évaluée sur la base du rapport
qualité d'une alternative d'itinéraire = (minimum (nombre de points de référence présents moins 1 ; nombre des points de référence situés sur l'alternative d'itinéraire) plus maximum (0 ; (1 moins écart moyen des points de référence par rapport à l'alternative d'itinéraire divisé par valeur seuil)) x 100)/ (nombre des points de référence).

14. Procédé selon l'une des revendications précédentes,
dans lequel un point de référence est considéré comme situé sur une alternative d'itinéraire quand sa distance géographique par rapport à l'alternative d'itinéraire ne dépasse pas une valeur seuil prédéterminée.

15. Procédé selon la revendication 14,
dans lequel la valeur seuil est prédéterminée en fonction de la précision indiquée par le terminal d'une information de point de référence.

16. Procédé selon l'une des revendications précédentes,
dans lequel seuls des segments de routes situés à l'intérieur du rayon d'erreur GPS d'un point de référence sont pris en considération.

17. Procédé selon l'une des revendications précédentes,
dans lequel au moins la position géographique du point de référence est transmise entre le véhicule et le central et prise en compte dans ce dernier dans les données de point de référence concernant un point de référence.

18. Procédé selon l'une des revendications précédentes
dans lequel le dernier point de référence est traité différemment dans la mesure où son affectation à un segment de route a lieu avec d'autres valeurs seuils ou pondérations, en particulier de la direction de trajet, du déplacement angulaire maximal, du tronçon parcouru depuis le dernier point de référence et du temps de trajet depuis le dernier point de référence.

19. Procédé selon l'une des revendications précédentes,
dans lequel le moment auquel un véhicule se trouve à un point de référence est détecté par le terminal et pris en compte dans les informations de point de référence.

20. Procédé selon l'une des revendications précédentes,
dans lequel la vitesse d'un véhicule au niveau d'un point de référence est détectée par le terminal et prise en compte dans les informations de point de référence.

21. Procédé selon l'une des revendications précédentes,
dans lequel le procédé est utilisé pour la navigation d'un véhicule avec un terminal.

22. Procédé selon l'une des revendications précédentes,
dans lequel la position géographique actuelle d'un véhicule et/ou la position actuelle d'un véhicule sur la carte numérique est déterminée sur la base de l'alternative d'itinéraire la plus probable.

23. Procédé selon l'une des revendications précédentes,
dans lequel le trajet parcouru jusqu'à présent par un véhicule sur la carte numérique est déterminé sur la base de l'alternative d'itinéraire la plus probable.

24. Procédé selon l'une des revendications précédentes,
dans lequel le nombre de points de référence est au moins 10 fois inférieur, en particulier 100 fois inférieur, aux segments de routes contenus dans l'une des alternatives d'itinéraire sur la carte numérique.

25. Procédé selon l'une des revendications précédentes,
dans lequel les informations de point de référence sont fournies pour l'analyse manuelle en cas de probabilité située en dessous d'une valeur seuil prédéterminée de l'alternative d'itinéraire la plus probable ou dans le cas où aucune alternative d'itinéraire n'a été trouvée.

26. Dispositif, en particulier pour la mise en oeuvre du procédé selon l'une des revendications précédentes, comportant
- un dispositif de détection pour les informations relatives aux points de référence détectées par un véhicule sur le parcours du véhicule dans le réseau de circulation,
- une mémoire incluant une carte numérique,
- un dispositif d'évaluation de probabilité pour l'évaluation des probabilités de la pertinence de plusieurs alternatives d'itinéraire sur la carte numérique en fonction des probabilités de segments de routes des alternatives d'itinéraire,
- un dispositif de sortie pour sortir la position actuelle et/ou l'itinéraire du véhicule sur la carte numérique.

27. Dispositif selon la revendication 26,
dans lequel le dispositif d'évaluation de probabilité comporte un processeur et un programme à exécuter par celui-ci.

28. Dispositif selon la revendication 26 ou 27,
dans lequel le dispositif de réception et/ou le dispositif d'émission comporte un dispositif de radiocommunication, en particulier un dispositif de radiocommunication mobile.

29. Dispositif selon l'une des revendications 26 à 28,
dans lequel un dispositif de réception destiné à recevoir des informations envoyées par un terminal et concernant des points de référence est prévu en tant que dispositif de détection et le dispositif est le central.
